# DEMANDE DE BREVET EUROPEEN

(11) **EP 2 090 985 A1**
(43) Date de publication de la demande: **19.08.2009**
(21) Numéro de dépôt: 09305129.0
(22) Date de dépôt: 12.02.2009
(51) Int. Cl.: G06F 11/07, H04L 29/06, H04L 12/18

(54) **Technique de mise en relation pour la reception par un terminal requérant d'au moins un contenu diffusé**

(30) Priorité: 18.02.2008 FR 0851025
(71) Demandeur: FRANCE TELECOM, 75015 Paris (FR)
(72) Inventeur: Mathieu, Fabien, 75015, PARIS (FR); Perino, Diego, 92130, Issy les Moulineaux (FR)

(57) **Abrégé**

L'invention concerne une technique de mise en relation pour la réception par un terminal requérant (20) d'au moins un contenu diffusé dans un réseau de communication (2) par l'intermédiaire d'un arbre de diffusion de contenu dans le réseau, comprenant :
- une étape de réception d'une requête d'accès à un contenu envoyée par le terminal requérant à un serveur (10) d'accès à des contenus diffusés ;
- une étape de vérification d'une aptitude du terminal requérant à recevoir le contenu diffusé par l'intermédiaire de l'arbre de diffusion ;
- une étape de détermination par le serveur d'un groupe d'au moins deux terminaux (22-28) recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu par lesdits terminaux ;
- une étape d'envoi au terminal requérant d'une réponse à sa requête d'accès au contenu, dans laquelle le serveur transmet au terminal requérant des informations relatives au groupe d'au moins deux terminaux,
lesdites étapes de détermination et d'envoi étant destinées à être mises en oeuvre si le terminal requérant n'est pas apte à recevoir le contenu diffusé par l'intermédiaire de l'arbre.

Le terminal obtient ensuite le contenu diffusé à partir d'au moins un terminal du groupe.

## Description

L'invention se situe dans le domaine des télécommunications, et plus particulièrement de la diffusion de contenu dans un réseau de communication.

Dans les réseaux de communication, les paquets sont généralement acheminés d'une source de diffusion d'un contenu vers un terminal récepteur. Toutefois, lorsqu'une pluralité de terminaux d'un réseau de communication souhaite recevoir un même contenu, il est possible de mettre en oeuvre la diffusion du contenu par l'intermédiaire d'un arbre de diffusion construit au niveau du réseau. Pour les réseaux de communication de type IP, pour "Internet Protocol", ce procédé de diffusion est appelé "Multicast IP". Ce procédé n'est généralement mis en oeuvre qu'à l'intérieur du réseau de communication. Ainsi, un terminal n'appartenant pas au réseau de communication dans lequel s'effectue la diffusion du contenu ne peut pas rejoindre l'arbre de diffusion.

Des techniques couramment appelées Multicast applicatif, telles que celle décrite par exemple dans l'article de M. Castro et al, intitulé "SCRIBE: A large-scale and decentralized application-level multicast infrastructure", IEEE JSAC, 2002, permettent d'émuler au niveau applicatif le fonctionnement d'un arbre de diffusion de type Multicast IP dans un réseau de recouvrement, par exemple de type "pair-à-pair", "peer to peer" en anglais, ou réseau P2P. Des terminaux, appelés pairs, sont indifférenciés et possèdent des capacités et des responsabilités équivalentes dans le réseau contrairement à une architecture de type client-serveur. Le contenu est distribué aux terminaux à travers un arbre de diffusion multicast construit entre les terminaux clients au niveau applicatif. Ce procédé permet à des terminaux de recevoir le contenu diffusé, indépendamment de leur appartenance ou non au réseau de communication mais présente l'inconvénient de ne pas pouvoir garantir une qualité de service, l'architecture reposant sur les terminaux appartenant à l'arbre de diffusion applicatif, dont on ne connaît pas les caractéristiques respectives.

Il existe donc un besoin d'une technique permettant à un terminal souhaitant accéder à la diffusion d'un contenu diffusé d'obtenir celui-ci en lui garantissant une qualité de service suffisante.

L'invention répond à ce besoin en proposant un procédé de mise en relation pour la réception par un terminal requérant d'au moins un contenu diffusé dans un réseau de communication par l'intermédiaire d'un arbre de diffusion de contenu dans le réseau, ledit procédé comprenant :
- une étape de réception d'une requête d'accès à un contenu envoyée par le terminal requérant à un serveur d'accès à des contenus diffusés,
- une étape de vérification d'une aptitude du terminal requérant à recevoir le contenu diffusé par l'intermédiaire de l'arbre de diffusion ;
- une étape de détermination par le serveur d'un groupe d'au moins deux terminaux recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu par lesdits terminaux,
- une étape d'envoi au terminal requérant d'une réponse à sa requête d'accès au contenu, dans laquelle le serveur transmet au terminal requérant des informations relatives au groupe d'au moins deux terminaux,
lesdites étapes de détermination et d'envoi étant destinées à être mises en oeuvre si le terminal requérant n'est pas apte à recevoir le contenu diffusé par l'intermédiaire de l'arbre.

On entend par terminal apte à recevoir un contenu diffusé par l'intermédiaire d'un arbre de diffusion de contenu dans un réseau de communication un terminal appartenant au réseau et éligible au service Multicast IP. Ainsi, un terminal d'un autre réseau de communication n'est pas apte à recevoir le contenu, du fait qu'il n'appartient pas au réseau dans lequel est construit l'arbre de diffusion.

Pour un contenu donné, le serveur d'accès gère une liste de terminaux recevant ce contenu. Pour chacun d'entre eux, il mémorise la bande passante dans le sens montant disponible. Par bande passante dans le sens montant d'un terminal, on entend la bande passante disponible pour rediffuser le contenu vers d'autres terminaux. Sur réception d'une requête d'accès au contenu, le serveur d'accès détermine à partir de la liste de terminaux recevant le contenu un groupe de terminaux, dimensionné de telle sorte que la capacité totale en bande passante montante du groupe est strictement supérieure à celle qui est nécessaire à la rediffusion du contenu. Cette dernière correspond à la bande passante utilisée par un serveur de contenus pour la diffusion du contenu dans l'arbre de diffusion. Il est possible de fixer un facteur prédéterminé, représentant le rapport entre la capacité de bande passante sur le groupe et celle nécessaire à la rediffusion du contenu. Le facteur prédéterminé doit être strictement supérieur à un. Il peut être par exemple de l'ordre de deux. Ainsi, le terminal requérant recevant des données d'identification du groupe de terminaux peut se mettre en relation avec un ou plusieurs terminaux en vue d'obtenir de ceux-ci tout ou partie du contenu. La capacité en bande passante du groupe lui permet dans une majorité des cas de recevoir le contenu donné.

Le terminal requérant, ainsi que sa capacité en bande passante dans le sens montant transmise par exemple dans la requête d'accès, est alors ajouté à la liste des terminaux recevant le contenu donné et peut participer ultérieurement à la diffusion du contenu vers un autre terminal requérant.

Ainsi, un terminal met en oeuvre un procédé de réception d'un contenu diffusé dans un réseau de communication comprenant les étapes suivantes :
- une étape d'envoi à un serveur d'accès à des contenus diffusés d'une requête d'accès à un contenu,
- une étape de réception d'une réponse à sa requête d'accès au contenu, comprenant des informations relatives à un groupe d'au moins deux terminaux capables de rediffuser le contenu,
- une étape d'obtention du contenu diffusé à partir d'au moins un terminal fournisseur du groupe.

Muni des informations relatives à un groupe de terminaux, notamment de données d'identification des terminaux du groupe, le terminal requérant peut alors contacter un ou plusieurs terminaux du groupe afin d'obtenir le contenu recherché.

Si le contenu ne peut être obtenu auprès des terminaux du groupe, le terminal requérant peut demander un nouveau groupe de terminaux auprès du serveur d'accès.

De plus, le procédé de mise en relation comprend en outre au moins une étape de réception d'informations en retour en provenance du terminal requérant, lesdites informations en retour étant relatives au groupe d'au moins deux terminaux envoyé et une étape de mise à jour à partir des informations en retour reçues d'une liste de terminaux recevant le contenu.

Ainsi, le serveur d'accès peut mettre à jour les informations relatives aux différents terminaux du groupe dans une liste de terminaux recevant le contenu.

De plus, le procédé de réception comprend en outre une étape d'envoi d'informations en retour au serveur d'accès, lesdites informations étant relatives au groupe d'au moins deux terminaux.

Le terminal requérant transmet au serveur d'accès des informations en retour relatives au groupe de terminaux. En effet, un des terminaux du groupe peut être déconnecté de la diffusion du contenu sans que le serveur d'accès n'en soit informé ou un terminal peut finalement offrir moins de bande passante que ce qui était connu au serveur. Ces informations en retour permettent donc au serveur d'accès de gérer la liste des terminaux recevant le contenu donné et d'offrir ainsi un service plus efficace.

Dans un mode de réalisation du procédé de mise en relation, si le groupe déterminé à l'étape de détermination ne comprend pas au moins un nombre prédéterminé de terminaux, la réponse à la requête d'accès à un contenu comprend une information relative à un serveur de diffusion du contenu en mode unicast.

Ainsi, quand le serveur d'accès ne peut garantir que le groupe de terminaux est à même de fournir le contenu donné avec une garantie de qualité de service, plus particulièrement lorsqu'un seul terminal reçoit le contenu donné, le terminal requérant est mis en relation avec un serveur de diffusion en mode unicast, en vue d'un téléchargement du serveur de diffusion en mode unicast vers le terminal dans un mode client-serveur.

L'invention concerne également un serveur d'accès à des contenus diffusés dans un réseau de communication, comprenant :
- des moyens de réception de requête d'accès à un contenu envoyée par un terminal requérant ;
- des moyens de test, agencés pour vérifier si le terminal requérant est apte à recevoir le contenu diffusé par l'intermédiaire d'un arbre de diffusion de contenu dans le réseau ;
- des moyens de détermination d'un groupe d'au moins deux terminaux recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu par lesdits terminaux ;
- des moyens d'envoi au terminal requérant d'une réponse à sa requête d'accès au contenu, agencés pour transmettre au terminal requérant des informations relatives au groupe d'au moins deux terminaux.

L'invention concerne en outre un terminal comprenant :
- des moyens d'envoi à un serveur d'accès à des contenus diffusés d'une requête d'accès à un contenu,
- des moyens de réception d'une réponse à la requête d'accès au contenu, ladite réponse comprenant des informations relatives à un groupe d'au moins deux terminaux, capables de rediffuser le contenu,
- des moyens d'obtention du contenu diffusé à partir d'au moins un terminal du groupe,
- des moyens d'envoi d'informations en retour au serveur d'accès, lesdites informations étant relatives au groupe d'au moins deux terminaux.

L'invention concerne de plus un système d'accès à des contenus diffusés comprenant :
- au moins un serveur d'accès à des contenus diffusés tel que décrit précédemment,
- au moins un premier terminal tel que décrit précédemment,
- au moins un deuxième terminal apte à recevoir un contenu diffusé par l'intermédiaire d'un arbre de diffusion de contenu dans un réseau de communication.

L'invention concerne en outre un programme d'ordinateur comportant des instructions pour la mise en oeuvre du procédé de mise en relation tel que décrit précédemment lorsque ce programme est exécuté par un processeur et un programme d'ordinateur comportant des instructions pour la mise en oeuvre du procédé de réception tel que décrit précédemment lorsque ce programme est exécuté par un processeur.

L'invention sera mieux comprise à l'aide de la description suivante d'un mode de réalisation particulier des procédés de l'invention, en référence aux dessins annexés sur lesquels :
- la figure 1 représente un schéma simplifié d'un système d'accès dans son environnement selon un mode particulier de réalisation de l'invention ;
- la figure 2 représente les étapes du procédé de réception d'un contenu diffusé selon un mode particulier de réalisation de l'invention ;
- la figure 3 représente les étapes du procédé de mise en relation pour la réception d'un contenu diffusé selon un mode particulier de réalisation de l'invention ;
- la figure 4 représente un serveur d'accès à des contenus diffusés selon un mode particulier de l'invention ;
- la figure 5 représente un terminal selon un mode particulier de l'invention.

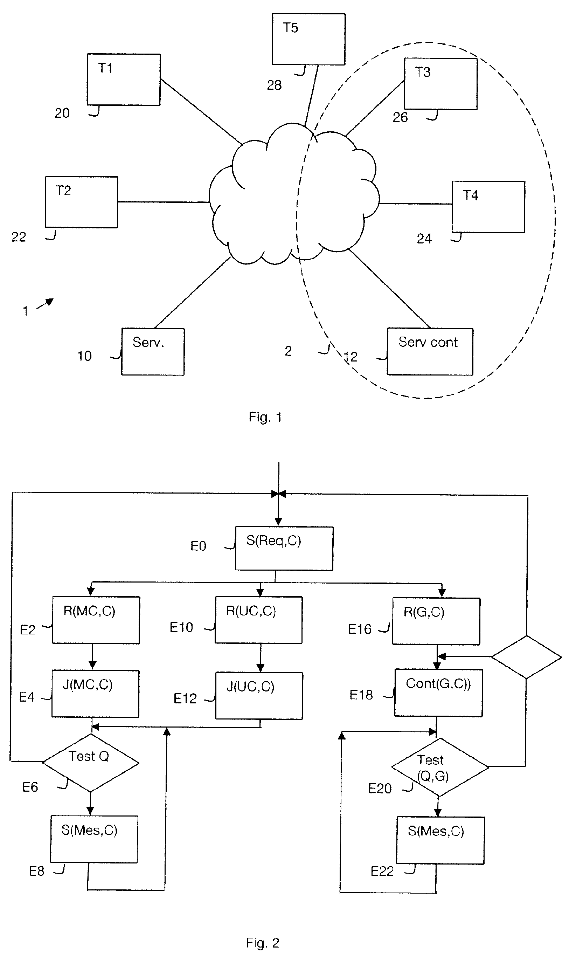

Sur la figure 1, est représenté de façon schématique un réseau de communication 1. Le réseau de communication 1 comprend une pluralité de dispositifs, aptes à communiquer entre eux par l'intermédiaire d'autres réseaux de communication sous-jacents, de type IP pour "Internet Protocol". Un serveur 12 de contenus, noté Serv cont, est apte à communiquer avec des terminaux 20, 22, 24, 26, 28, notés respectivement T1, T2, T3, T4, T5 sur la figure 1. Le serveur 12 de contenus et les terminaux 24, 26 appartiennent à un autre de ces réseaux de communication sous-jacents 2, géré par un opérateur donné. Le serveur 12 de contenus peut diffuser des contenus en temps réel dans différents modes. Afin de simplifier la description, on ne considère par la suite qu'un seul contenu diffusé en temps réel, noté C. Dans un premier mode, appelé par la suite mode Unicast, le serveur 12 de contenus diffuse à des terminaux, par exemple au terminal 22, le contenu C par téléchargement dans une architecture de type client-serveur. Dans un deuxième mode, appelé par la suite mode Multicast, le serveur 12 de contenus diffuse à d'autres terminaux, par exemple les terminaux 24, 26, un contenu en temps réel par l'intermédiaire d'un arbre de diffusion construit dans le réseau de communication sous-jacent 2. Ce deuxième mode est appelé généralement Multicast IP. Par la suite, le sens montant correspond au sens correspondant à l'émission de flux de données à partir d'un terminal.

Un serveur 10 d'accès aux contenus diffusés, noté Serv sur la figure 1, est apte notamment à mettre en relation :
- des terminaux, par exemple les terminaux 24, 26, avec l'arbre de diffusion du contenu C dans le deuxième mode de diffusion ;
- des terminaux, par exemple le terminal 22, avec le serveur 12 de contenus dans le premier mode de diffusion ;
- des terminaux, par exemple les terminaux 20, 28, avec d'autres terminaux, aptes à lui rediffuser le contenu. Ce mode de diffusion est appelé par la suite troisième mode de diffusion.

Le serveur 10 d'accès gère une liste L associée à un contenu diffusé donné C. La liste mémorise notamment les terminaux recevant le contenu, leur mode de réception respectif, leur bande passante disponible respective dans le sens montant. Cette liste est appelée L(C) par la suite.

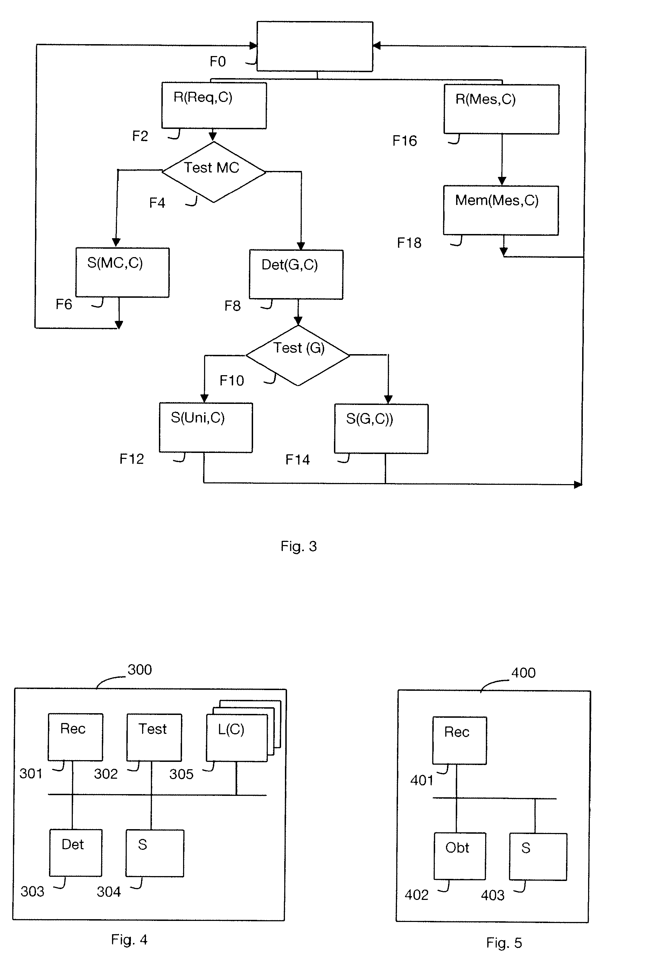

Le procédé de mise en relation pour la réception d'un contenu diffusé C par un terminal va maintenant être décrit en relation avec la figure 3.

Dans une étape initiale F0, le serveur 10 d'accès à des contenus diffusés est en attente de réception de messages en provenance de terminaux.

Dans une étape F2 de réception d'une requête d'accès, notée "R(Req, C)", le serveur 10 d'accès reçoit une requête d'accès au contenu C en provenance du terminal 20, appelé par la suite terminal requérant. Cette requête d'accès comprend, outre l'identification du contenu C recherché, une identification du terminal, par exemple un identifiant, une adresse IP dans le réseau de communication 2, un numéro de port TCP (pour "Transmission Control Protocol") ou UDP (pour "User Datagram Protocol"), ainsi que la capacité en bande passante disponible dans le sens montant pour le terminal.

Le serveur 10 d'accès vérifie dans une étape F4 de test, notée "Test MC", si le terminal 20 est apte à recevoir le contenu diffusé C par l'intermédiaire de l'arbre de diffusion de contenu dans le réseau de communication 2 sous-jacent. Un terminal est par exemple apte à recevoir le contenu C par l'intermédiaire de l'arbre de diffusion dans le réseau de communication sous-jacent 2 s'il appartient lui-même à ce réseau de communication. Dans ce cas, il suffit de vérifier à partir de l'adresse IP du terminal s'il s'agit d'une adresse du réseau de communication sous-jacent 2.

Si le terminal 20 est apte à recevoir le contenu C en mode Multicast, c'est-à-dire par l'intermédiaire de l'arbre de diffusion, dans une étape F6, notée "S(MC,C)", le serveur 10 transmet au terminal 20 les informations lui permettant de joindre l'arbre de diffusion du contenu C afin de recevoir le contenu, c'est-à-dire l'adresse IP du groupe Multicast. Il mémorise ensuite dans la liste L associée au contenu C, L(C), que le terminal 20 va recevoir le contenu C en mode Multicast et la capacité en bande passante dans le sens montant de celui-ci.

Si le terminal 20 n'est pas apte à recevoir le contenu C en mode Multicast, dans une étape F8 de détermination d'un groupe de terminaux, notée "Det(G,C)", le serveur 10 d'accès détermine à partir de la liste L(C) associée au contenu C si un groupe de terminaux G recevant le contenu C est apte à rediffuser le contenu vers le terminal 20. Il s'agit de déterminer un groupe de terminaux G, capables de rediffuser le contenu en fonction d'une bande passante, tel que la somme des bandes passantes disponibles respectives des terminaux du groupe est supérieure d'un facteur prédéterminé α à la bande passante nécessaire à une rediffusion du contenu par les terminaux. La bande passante nécessaire à une rediffusion du contenu correspond à la bande passante utilisée par le serveur 12 de contenus pour la diffusion du contenu dans l'arbre de diffusion dans le réseau. Le groupe de terminaux contient des terminaux recevant le contenu C dans un quelconque des modes de diffusion. Le facteur prédéterminé α est strictement supérieur à un. A titre d'exemple, en choisissant α de l'ordre de deux, on peut garantir que la capacité en bande passante disponible pour ce groupe de terminaux est dimensionnée correctement pour un fonctionnement correct du procédé. La capacité en bande passante excédentaire est suffisante pour éviter que le terminal requérant 20 ne sollicite trop fréquemment le serveur 10 d'accès.

Dans une étape F10 de test, notée "Test(G)", le serveur 10 d'accès vérifie si le nombre de terminaux compris dans le groupe est suffisant, c'est-à-dire dans le mode particulier de réalisation s'il comprend au moins deux terminaux.

Si le groupe de terminaux comprend au moins deux terminaux, le serveur 10 d'accès transmet dans une étape F14 d'envoi d'une réponse, notée "S(G,C)", un message de réponse à la requête d'accès du terminal 20 comprenant des informations relatives au groupe de terminaux. Il s'agit d'informations permettant au terminal requérant de contacter chaque terminal du groupe de terminaux, par exemple, des données d'identification telles que l'identifiant du terminal, son adresse IP, un numéro de port TCP ou UDP. Optionnellement, on peut également inclure des données d'authentification permettant de sécuriser ultérieurement l'accès au contenu. Le serveur 10 d'accès mémorise ensuite dans la liste L associée au contenu C, L(C), que le terminal 20 est mis en relation avec un groupe de terminaux capables de rediffuser ce contenu et la capacité en bande passante dans le sens montant de celui-ci. Le procédé de mise en relation retourne ensuite à l'étape F0, en attente de réception d'un message.

Si le groupe de terminaux ne comprend qu'un seul terminal ou s'il n'est pas possible de déterminer un groupe de terminaux, le serveur 10 d'accès transmet dans une étape F12, notée "S(Uni,C)", au terminal requérant 20 un message de réponse à la requête d'accès comprenant l'adresse du serveur 12 de contenus, apte à diffuser le contenu C au terminal requérant 20 en mode Unicast. Le serveur 10 d'accès mémorise ensuite dans la liste L associée au contenu C, L(C), que le terminal 20 va obtenir le contenu C en mode Unicast et la capacité en bande passante dans le sens montant de celui-ci. Le procédé de mise en relation retourne ensuite à l'étape F0 en attente de réception d'un message.

Dans une étape de réception de messages F16, notée "R(Mes,C)", le serveur 10 d'accès reçoit en provenance du terminal 20 des informations en retour (ou "feedback" en anglais) relatives au groupe de terminaux envoyé au terminal requérant à l'étape F14 et également des informations relatives à la capacité en bande passante disponible du terminal 20. En ce qui concerne le groupe de terminaux, il s'agit par exemple d'informations en retour relatives à des terminaux qui n'ont pas répondu au terminal requérant, d'informations relatives à des terminaux auprès desquels le terminal requérant obtient le contenu C. Ceci permet au serveur 10 de détecter des déconnexions de certains terminaux non annoncées ou des dégradations perçues par le terminal requérant 20 lors de la réception du contenu C. Dans une étape F18, notée "Mem(Mes,C)", la liste L(C) est mise à jour en fonction de ces informations et permet ainsi lors d'une étape de détermination pour une requête d'accès au contenu C ultérieure de fournir un groupe de terminaux de façon plus fiable. Le procédé de mise en relation retourne ensuite à l'étape F0 en attente de réception d'un message.

Dans une première variante au mode de réalisation, lors de l'étape F8 de détermination d'un groupe de terminaux, le serveur 10 d'accès vérifie que le groupe de terminaux déterminé est tel que, si on retire du groupe un sous-ensemble composé des β terminaux présentant les meilleures capacités en bande passante dans le sens montant, la somme des capacités en bande passante dans le sens montant sur le groupe privé du sous-ensemble est supérieure à la capacité en bande passante nécessaire à la rediffusion du contenu vers le terminal requérant 20. Ainsi, le groupe de terminaux fourni au terminal requérant permet de garantir une bonne qualité de réception du contenu.

Dans une deuxième variante au mode de réalisation ou à la première variante, la liste L(C) comprenant des terminaux recevant le contenu C selon l'un des trois modes de diffusion, le procédé peut sélectionner lors de l'étape F8 de détermination d'un groupe de terminaux selon un ordre de préférence prédéterminé, par exemple en premier lieu des terminaux recevant le contenu C en mode Unicast, puis des terminaux recevant le contenu en mode Multicast pour terminer par ceux recevant le contenu dans le troisième mode de diffusion.

Optionnellement, on limite également lors de l'étape F8 de détermination d'un groupe de terminaux le nombre de terminaux inclus dans le groupe. Ainsi, pour obtenir le contenu, le nombre de connexions simultanées à gérer par le terminal requérant est limité.

Le procédé de réception d'un contenu diffusé C dans un réseau de communication 1 tel que mis en oeuvre par un terminal requérant va maintenant être décrit en relation avec la figure 2.

Dans une étape E0 d'envoi d'une requête, notée "S(req, C)", le terminal requérant 20 envoie une requête d'accès à un contenu C à un serveur 10 d'accès à des contenus diffusés. Cette requête d'accès comprend, outre l'identification du contenu C recherché, une identification du terminal, par exemple un identifiant, une adresse IP dans le réseau de communication 2, un numéro de port TCP ou UDP, ainsi que la capacité en bande passante disponible dans le sens montant pour le terminal. Le procédé de réception est en attente de réponse à cette requête d'accès.

Dans une étape E2 de réception, notée "R(MC,C)", le terminal requérant 20 reçoit un message de réponse à sa requête d'accès comprenant les informations relatives à l'arbre de diffusion dans le réseau de communication 2 du contenu C, c'est-à-dire une adresse IP du groupe Multicast. Dans une étape E4, notée "J(MC,C)", le terminal requérant 20 rejoint l'arbre de diffusion et reçoit le contenu en mode Multicast IP. Dans une étape E6 de test de qualité, notée "Test Q", le terminal requérant 20 vérifie si la qualité de réception du contenu C est satisfaisante. Si la qualité est satisfaisante, le terminal requérant 20 transmet, dans une étape E8 de transmission de rapports de mesure, notée "S(Mes,C)", au serveur 10 d'accès un message comprenant des informations relatives à la qualité de réception du contenu C et la capacité en bande passante disponible dans le sens montant. Le procédé de réception retourne ensuite à l'étape E6 de test de la qualité et transmet ainsi périodiquement, tant qu'il reçoit le contenu C, des mesures de qualité.

Dans une étape E10 de réception, notée "R(UC,C), le terminal requérant 20 reçoit un message de réponse à sa requête d'accès comprenant une information relative au serveur de contenus 12. Il s'agit par exemple de l'adresse IP du serveur 12. Dans une étape E12, notée "J(UC,C)", le terminal requérant 20 établit une connexion avec le serveur 12 en vue d'obtenir le contenu diffusé en mode téléchargement client-serveur. Le procédé effectue ensuite les étapes E6 de test de qualité et E8 de transmission de rapport de mesure, telles que décrites ci-dessus, tant qu'il reçoit le contenu C.

Dans une étape E16 de réception, notée "R(G,C)", le terminal requérant 20 reçoit en réponse à sa requête d'accès au contenu C un message comprenant des informations relatives à un groupe G de terminaux capables de lui rediffuser le contenu C. Dans une étape E18 d'obtention du contenu, notée "Cont(G,C)", le terminal requérant 20 contacte un ou plusieurs des terminaux du groupe afin d'obtenir le contenu. Il peut par exemple mettre en oeuvre une méthode de type Multicast applicatif, dans laquelle un arbre de diffusion au niveau applicatif est construit à partir d'un ensemble de terminaux. Une telle méthode est par exemple précisée dans l'article de M. Castro et al, intitulé "SCRIBE: A large-scale and decentralized application-level multicast infrastructure", IEEE JSAC, 2002.

Dans une étape E20 de test de qualité, notée "Test(Q,G)", le terminal requérant 20 vérifie si la qualité de réception du contenu C est suffisante. Si ce n'est pas le cas et que la capacité disponible restante du groupe de terminaux n'est pas suffisante, le procédé de réception retourne à l'étape E0 d'envoi d'une requête d'accès au contenu C au serveur 10 d'accès. Si la qualité n'est pas suffisante mais qu'il lui reste des terminaux du groupe à contacter, il réitère l'étape E18.

Si la qualité est suffisante, dans une étape E22, notée "S(Mes,C)", le terminal requérant 20 transmet au serveur 10 d'accès des informations en retour relatives au groupe de terminaux, notamment des informations relatives à des terminaux qui n'ont pas répondu au terminal requérant, des informations relatives à des terminaux auprès desquels le terminal requérant obtient le contenu C, ainsi qu'une capacité en bande passante dans le sens montant disponible. Le procédé de réception retourne ensuite à l'étape E20 de test de qualité et transmet ainsi périodiquement, tant qu'il reçoit le contenu C, des mesures de qualité.

Un serveur 10, 300 d'accès à des contenus diffusés dans un réseau de communication 2 va maintenant être décrit en relation avec la figure 4. Il comprend :
- des moyens de stockage d'une liste L associée à un contenu, L(C), agencés pour mémoriser les terminaux recevant le contenu, leur mode de réception respectif, leur bande passante disponible dans le sens montant respective ;
- un module 301 de réception de requête d'accès à un contenu envoyée par un terminal requérant ;
- un module 302 de test, agencé pour vérifier si le terminal requérant est apte à recevoir le contenu diffusé par l'intermédiaire d'un arbre de diffusion de contenu dans le réseau ;
- un module 303 de détermination d'un groupe d'au moins deux terminaux recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu ;
- un module 304 d'envoi au terminal requérant d'une réponse à sa requête d'accès au contenu, agencés pour transmettre au terminal requérant des informations relatives à un mode d'obtention du contenu.

Le module 303 est en outre agencé pour vérifier si la liste comprend au moins un nombre prédéterminé de terminaux.

Le module 304 est agencé pour transmettre au terminal requérant :
- si le résultat du test effectué par le module 302 est positif, les informations lui permettant de joindre l'arbre de diffusion du contenu C afin de recevoir le contenu,
- si le résultat du test effectué par le module 302 est négatif, les informations relatives à un groupe d'au moins deux terminaux, déterminé par le module 303,
- des informations relatives à un serveur de diffusion du contenu en mode Unicast.

Le serveur d'accès comprend en outre un module (non représenté sur la figure 4) de réception de mesures ou d'informations en retour en provenance d'un terminal.

Optionnellement, le module 303 est agencé pour vérifier si le groupe de terminaux déterminé est tel que, si on retire du groupe un sous-ensemble composé des β terminaux présentant les meilleures capacités en bande passante dans le sens montant, la somme des capacités en bande passante dans le sens montant sur le groupe privé du sous-ensemble est supérieure à la capacité en bande passante nécessaire à la rediffusion du contenu vers le terminal requérant.

Optionnellement, le module 303 est agencé pour limiter le nombre de terminaux inclus dans le groupe.

Un terminal 20, 400 selon un mode particulier de réalisation va maintenant être décrit en relation avec la figure 5.

Le terminal comprend :
- un module 403 d'envoi à un serveur d'accès à des contenus diffusés d'une requête d'accès à un contenu,
- un module 401 de réception d'une réponse à la requête d'accès au contenu, ladite réponse comprenant des informations relatives à un groupe d'au moins un terminal, capable de rediffuser le contenu,
- un module 402 d'obtention du contenu diffusé à partir d'au moins un terminal du groupe,
- un module (non représenté sur la figure 5) d'envoi de mesures ou d'informations en retour relatives au groupe de terminaux.

L'invention concerne également un système d'accès à des contenus diffusés comprenant :
- au moins un serveur 10, 300 d'accès à des contenus diffusés tel que décrit précédemment,
- au moins un premier terminal 20, 400 tel que décrit précédemment,
- au moins un deuxième terminal 24, 26 apte à recevoir un contenu diffusé par l'intermédiaire d'un arbre de diffusion de contenu dans un réseau de communication 2.

Les modules 301, 302, 303 et 304 sont agencés pour mettre en oeuvre le procédé de mise en relation précédemment décrit. Les modules 401, 402 et 403 sont agencés pour mettre en oeuvre le procédé de réception d'un contenu précédemment décrit. Il s'agit de préférence de modules logiciels comprenant des instructions logicielles pour faire exécuter les étapes du procédé de mise en relation précédemment décrit, mises en oeuvre par un serveur d'accès à des contenus diffusés dans un réseau de communication. Il s'agit de préférence de modules logiciels comprenant des instructions logicielles pour faire exécuter les étapes du procédé de réception précédemment décrit, mises en oeuvre par un terminal dans un réseau de communication.

L'invention concerne donc aussi :
- un programme d'ordinateur comportant des instructions pour la mise en oeuvre du procédé de mise en relation tel que décrit précédemment lorsque ce programme est exécuté par un processeur ;
- un support d'enregistrement lisible par un serveur d'accès à des contenus diffusés dans un réseau de communication sur lequel est enregistré le programme d'ordinateur décrit ci-dessus.

L'invention concerne également :
- un programme d'ordinateur comportant des instructions pour la mise en oeuvre du procédé de réception d'un contenu diffusé tel que décrit précédemment lorsque ce programme est exécuté par un processeur ;
- un support d'enregistrement lisible par un terminal sur lequel est enregistré le programme d'ordinateur décrit ci-dessus.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Dans une variante, l'invention peut être mise en oeuvre par deux serveurs de contenus, le premier dédié au mode de diffusion Multicast, le second au mode de diffusion Unicast.

Dans une autre variante, un seul serveur joue les rôles des serveurs 10 d'accès et 12 de contenus.

## Revendications

1. Procédé de mise en relation pour la réception par un terminal requérant (20) d'au moins un contenu diffusé dans un réseau de communication (2) par l'intermédiaire d'un arbre de diffusion de contenu dans le réseau, ledit procédé comprenant :
- une étape (F2) de réception d'une requête d'accès à un contenu envoyée par le terminal requérant à un serveur (10) d'accès à des contenus diffusés,
- une étape (F4) de vérification d'une aptitude du terminal requérant à recevoir le contenu diffusé par l'intermédiaire de l'arbre de diffusion ;
- une étape (F8) de détermination par le serveur d'un groupe d'au moins deux terminaux (22-28) recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu par lesdits terminaux;
- une étape (F14) d'envoi au terminal requérant d'une réponse à sa requête d'accès au contenu, dans laquelle le serveur transmet au terminal requérant des informations relatives au groupe d'au moins deux terminaux,
lesdites étapes de détermination et d'envoi étant destinées à être mises en oeuvre si le terminal requérant n'est pas apte à recevoir le contenu diffusé par l'intermédiaire de l'arbre.

2. Procédé selon la revendication 1, comprenant en outre au moins une étape (F16) de réception d'informations en retour en provenance du terminal requérant, lesdites informations en retour étant relatives au groupe d'au moins deux terminaux envoyé et une étape (F16) de mise à jour à partir des informations en retour reçues d'une liste de terminaux recevant le contenu.

3. Procédé selon la revendication 1, dans lequel, si le groupe déterminé à l'étape de détermination ne comprend pas au moins un nombre prédéterminé de terminaux, la réponse (F12) à la requête d'accès à un contenu comprend une information relative à un serveur (12) de diffusion du contenu en mode unicast.

4. Procédé de réception par un terminal (20) d'un contenu diffusé dans un réseau de communication (1), comprenant les étapes suivantes mises en oeuvre par le terminal :
- une étape (E0) d'envoi à un serveur (10) d'accès à des contenus diffusés d'une requête d'accès à un contenu,
- une étape (E16) de réception d'une réponse à sa requête d'accès au contenu, comprenant des informations relatives à un groupe d'au moins deux terminaux capables de rediffuser le contenu,
- une étape (E 18) d'obtention du contenu diffusé à partir d'au moins un terminal fournisseur du groupe,
- une étape (E22) d'envoi d'informations en retour au serveur d'accès, lesdites informations étant relatives au groupe d'au moins deux terminaux.

5. Serveur (10,300) d'accès à des contenus diffusés dans un réseau de communication (2), comprenant :
- des moyens (301) de réception de requête d'accès à un contenu envoyée par un terminal requérant ;
- des moyens (302) de test, agencés pour vérifier si le terminal requérant est apte à recevoir le contenu diffusé par l'intermédiaire d'un arbre de diffusion de contenu dans le réseau ;
- des moyens (303) de détermination d'un groupe d'au moins deux terminaux recevant le contenu et capables de rediffuser le contenu en fonction d'une bande passante, le groupe étant déterminé de sorte que la somme des bandes passantes disponibles respectives des terminaux du groupe est strictement supérieure à la bande passante nécessaire à une rediffusion du contenu par lesdits terminaux ;
- des moyens (304) d'envoi au terminal requérant d'une réponse à sa requête d'accès au contenu, agencés pour transmettre au terminal requérant des informations relatives au groupe d'au moins deux terminaux.

6. Terminal (20,400) comprenant :
- des moyens (403) d'envoi à un serveur d'accès à des contenus diffusés d'une requête d'accès à un contenu,
- des moyens (401) de réception d'une réponse à la requête d'accès au contenu, ladite réponse comprenant des informations relatives à un groupe d'au moins deux terminaux, capable de rediffuser le contenu,
- des moyens (402) d'obtention du contenu diffusé à partir d'au moins un terminal du groupe,
- des moyens (E22) d'envoi d'informations en retour au serveur d'accès, lesdites informations étant relatives au groupe d'au moins deux terminaux.

7. Système d'accès à des contenus diffusés comprenant :
- au moins un serveur (10,300) d'accès à des contenus diffusés selon la revendication 5,
- au moins un premier terminal (20,400) selon la revendication 6,
- au moins un deuxième terminal (24,26) apte à recevoir un contenu diffusé par l'intermédiaire d'un arbre de diffusion de contenu dans un réseau de communication (2).

8. Programme d'ordinateur comportant des instructions pour la mise en oeuvre du procédé de mise en relation selon la revendication 1 lorsque ce programme est exécuté par un processeur.

9. Programme d'ordinateur comportant des instructions pour la mise en oeuvre du procédé de réception selon la revendication 4 lorsque ce programme est exécuté par un processeur.
